# EUROPÄISCHE PATENTSCHRIFT

(11) **EP 0 594 815 B1**
(45) Veröffentlichungstag und Bekanntmachung des Hinweises auf die Patenterteilung: **31.01.1996**
(21) Anmeldenummer: 93909542.8
(22) Anmeldetag: 04.05.1993
(51) Int. Cl.: B01J 2/08, B01J 13/04

(54) **VERFAHREN UND VORRICHTUNG ZUR HERSTELLUNG VON MIKROKUGELN**
PROCESS AND DEVICE FOR PRODUCING MICROSPHERES
PROCEDE ET DISPOSITIF DE FABRICATION DE MICROBILLES

(30) Priorität: 04.05.1992 DE 4214272
(43) Veröffentlichungstag der Anmeldung: 04.05.1994
(73) Patentinhaber: NUKEM GmbH, D-63755 Alzenau (DE)
(72) Erfinder: THEISEN, Wolfgang, D-6458 Rodenbach (DE); BRAUNEIS, Edwin, D-6458 Rodenbach 1 (DE); PIRSTADT, Bernd, D-6945 Ahorn (DE)
(74) Vertreter: Stoffregen, Hans-Herbert, Dr. Dipl.-Phys.
(86) Internationale Anmeldenummer: EP9301082
(87) Internationale Veröffentlichungsnummer: WO9322045

(56) Entgegenhaltungen:
- FR-A- 2 387 076
- GB-A- 2 094 771
- US-A- 3 957 933

## Beschreibung

Die Erfindung bezieht sich auf ein Verfahren zur Herstellung von Mikrokugeln mittels über mehrere Öffnungen einer Düsenplatte erfolgender vibrationsangeregter Vertropfung von Flüssigkeit, wobei die Tropfen bei Durchfallen einer ersten Fallstrecke eine Kugelform annehmen und anschließend in einer zweiten Fallstrecke zur Gelierung einem Reaktionsgas ausgesetzt werden, um sodann in eine gegebenenfalls eine Schaumschicht aufweisende Reaktionsflüssigkeit zu fallen.

Ferner bezieht sich die Erfindung auf eine Vorrichtung zur Herstellung von Mikrokugeln umfassend eine mehrere Öffnungen zum Vertropfen einer Flüssigkeit aufweisende und in Vibration versetzbare Düsenplatte, eine zur Düsenplatte beabstandete Reaktionsfallstrecke, in der von der Düsenplatte fallende Tropfen mit einem Reaktionsgas reagieren, und eine unterhalb der Fallstrecke in einem Behältnis vorhandene Reaktionsflüssigkeit, die gegebenenfalls mit einem Schaum bedeckbar ist.

Ein entsprechendes Verfahren bzw. Vorrichtung ist der DE 28 16 059 C3 zu entnehmen. Dabei soll ein Kernbrennstoff-Granulat hergestellt werden, wobei das gewonnene Granulat aus Uranoxid einen Durchmesser von etwa 80 µm aufweist. In der Praxis hat sich gezeigt, daß mit einem entsprechenden Verfahren bzw. einer solchen Vorrichtung größere Kugeln im Bereich bis in etwa 5mm nicht hergestellt werden können, insbesondere nicht in großtechnischen Anlagen.

Neben der vibrationsangeregten Vertropfung ist auch die Schwerkraft-Abtropftechnik bekannt, mit der sich jedoch lediglich kleine Vertropfungsraten von ca. 1 bis 10 Tropfen pro Düse und Sekunde erzielen lassen.

Der vorliegenden Erfindung liegt das Problem zugrunde, ein Verfahren und eine Vorrichtung der eingangs beschriebenen Art so weiterzubilden, daß Kugeln hinreichend gleichmäßiger Geometrie mit einem Durchmesser im Bereich bis zu 5mm hergestellt werden können, wobei eine Umsetzung in großtechnischen Allagen möglich sein soll.

Verfahrensmäßig wird das Problem im wesentlichen dadurch gelöst, daß durch jede Öffnung der Düsenplatte pro Zeiteinheit die gleiche Flüssigkeitsmenge hindurchtritt, daß die fallenden Tropfen eine Umhüllende bilden, die allseitig von dem Reaktionsgas umströmt wird, und daß Reaktionsgas inner- oder außerhalb der Umhüllenden umfangsseitig eingeleitet und außer- oder innerhalb der Umhüllenden abgesaugt wird.

Erfindungsgemäß tritt die Flüssigkeit wie Dispersion durch eine Vielzahl von Öffnungen wie Düsenbohrungen, die auf einem oder mehreren konzentrisch zueinander angeordneten Kreisen angeordnet sind, mit gleichen Volumenströmen aus, um bei in periodischer Schwingung versetzter Düsenplatte vertropft zu werden. Hierdurch wird eine als Umhüllende bezeichnete "Tropfenwand" gebildet, die z.B. die geometrische Form eines Zylindermantels aufweisen kann.

Sodann wird den aus den Öffnungen austretenden Tropfen in der ersten Fallstrecke die Gelegenheit gegeben, Kugelform einzunehmen, bevor sie die zweite Fallstrecke erreichen, in der die Kugelform dadurch stabilisiert wird, daß die Flüssigkeit der Tropfen durch Begasung mit Reaktionsgas zu einer Sol-Gel-Reaktion angeregt wird. Sodann gelangen die eine stabile Kugelform aufweisenden Tropfen in die Reaktionsflüssigkeit, wobei zuvor entweder eine Abbremsung in einem auf der Flüssigkeit vorhandenen Schaum erfolgt oder Reaktionsflüssigkeit an die herabfallenden Tropfen tangential oder im wesentlichen tangential und gleichgerichtet zur Tropfenfallrichtung herangeführt wird. Durch beide Maßnahmen ist sichergestellt, daß die Tropfen beim Auftreffen auf die in einem Behältnis vorhandene Reaktionsflüssigkeit nicht deformiert wie abgeflacht werden.

Insbesondere werden die Tropfen einem Reaktionsgas allseitig ausgesetzt, von diesem umhüllt, das vom Inneren der Umhüllenden abgegeben und außerhalb der Umhüllenden abgesaugt wird, wobei die Absaugung zwischen der Gaszuführung und den Düsen erfolgt.

Vorrichtungsmäßig wird das Problem dadurch gelöst, daß inner- oder außerhalb einer durch scheinbares Verbinden der fallenden Tropfen gebildeten Umhüllenden eine das Reaktionsgas abgebende Begasungseinrichtung innerhalb der Reaktionsfallstrecke angeordnet ist, daß außer- oder innerhalb der Umhüllenden eine Reaktionsgas absaugende Absaugeinrichtung angeordnet ist und daß inner- und/oder außerhalb der Umhüllenden in der Reaktionsflüssigkeit eine Einrichtung zur Erzeugung des Schaums angeordnet ist oder daß oberhalb vom Flüssigkeitsspiegel und konzentrisch zur Umhüllenden eine Reaktionsflüssigkeitsverteileinrichtung derart angeordnet und ausgebildet ist, daß Reaktionsflüssigkeit an die herabfallenden Tropfen tangential und gleichgerichtet zur Tropfenfallrichtung heranführbar ist.

Die Umhüllende weist vorzugsweise eine Zylindermantelform auf, zu der koaxial die Begasungseinrichtung, die Absaugeinrichtung und die Ringkammer angeordnet sind.

Die Begasungseinrichtung selbst ist Teil eines ringförmigen Reaktionsraumes bzw. begrenzt diesen und kann innerhalb der Umhüllenden derart angeordnet sein, daß ein allseitiges Umströmen der fallenden Tropfen im Reaktionsgas sichergestellt ist, damit die erforderliche Sol-Gel-Reaktion ablaufen kann.

Das Gas kann über einen höhen- und/oder weiteneinstellbaren Ringspalt vom Inneren der Umhüllenden her abgegeben werden, wobei das Gas über ein tellerförmiges unteres Element gegen eine oberhalb von diesem verlaufende Fläche strömt, die mit dem umlaufenden oberen Rand des tellerförmigen Elements den Ringspalt begrenzt.

Hierdurch ergibt sich der Vorteil, daß die Fallstrecke zur Ausformung der Kugeln bis zur intensiven Anblasung mit Reaktionsgas veränderbar ist. Auch ist die Anblasgeschwindigkeit des radial austretenden Reaktionsgases veränderbar. Dadurch wird wiederum die chemische Reaktion beim Gelieren der Kugeln beeinflußt.

Die oder eine weitere Begasungseinrichtung kann auch die Umhüllende umgeben.

Vorzugsweise oberhalb der Begasungseinrichtung, also zwischen dieser und der Düsenplatte ist die Absaugeinrichtung angeordnet, die ringförmig die Umhüllende umgeben kann.

Um optimale Bedingungen zu erzielen, können die Absaugeinrichtung und die Begasungseinrichtung auf gegenüberliegenden Seiten der Umhüllenden angeordnet sein.

Nach einer weiteren Ausgestaltung der Erfindung ist vorgesehen, daß sich die den Schaum erzeugende Ringkammer zumindest abschnittsweise innerhalb der Reaktionsflüssigkeit erstreckt.

Um sicherzustellen, daß die in die Reaktionsflüssigkeit fallenden Tropfen beim Auftreffen auf die Flüssigkeitsoberfläche nicht abgeflacht werden, muß nicht notwendigerweise ein eine Abbremsung bewirkendes Schaumkissen vorhanden sein. Dieses kann gegebenenfalls sogar nachteilig sein, da die Reaktionsflüssigkeit mit Tensiden angereichert wird, wodurch gegebenenfalls die herzustellenden Kugeln verunreinigt werden können. Ferner können gelöste Tenside zu einem unkontrollierten Aufschäumen im Flüssigkeitskreislauf führen.

Daher sieht ein Vorschlag vor, daß die Tropfen an eine pilzförmig ausgebildete Reaktionsflüssigkeitsverteileinrichtung herangeführt werden, auf deren Oberfläche tangential oder im wesentlichen tangential zur Tropfenfallrichtung und gleichgerichtet Reaktionsflüssigkeit strömt. Dabei wird der Verteileinrichtung Reaktionsflüssigkeit derart zugeführt und entlang dieser geführt, daß sich eine laminare Strömungsschicht ausbildet, deren Dicke einstellbar ist.

Durch diese Maßnahmen werden die herabfallenden Tropfen schonend aufgenommen, so daß eine Deformation beim Auftreffen auf die Flüssigkeitsoberfläche ausgeschlossen ist. Vielmehr umhüllt die Reaktionsflüssigkeitsschicht die Tropfen während des Entlangströmens auf der Verteileinrichtung, so daß ein plötzliches Auftreffen auf die Flüssigkeitsoberfläche nicht auftreten kann.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung einer Ausführungsform sowie der beschriebenen Beispiele.

Es zeigen:
- Fig.1: eine Prinzipdarstellung einer Vorrichtung zur Herstellung von Mikrokugeln,
- Fig.2: Details einer bevorzugten Vorrichtung zur Herstellung von Mikrokugeln und
- Fig. 3: eine Prinzipdarstellung einer weiteren Ausführungsform einer Vorrichtung zur Herstellung von Mikrokugeln.

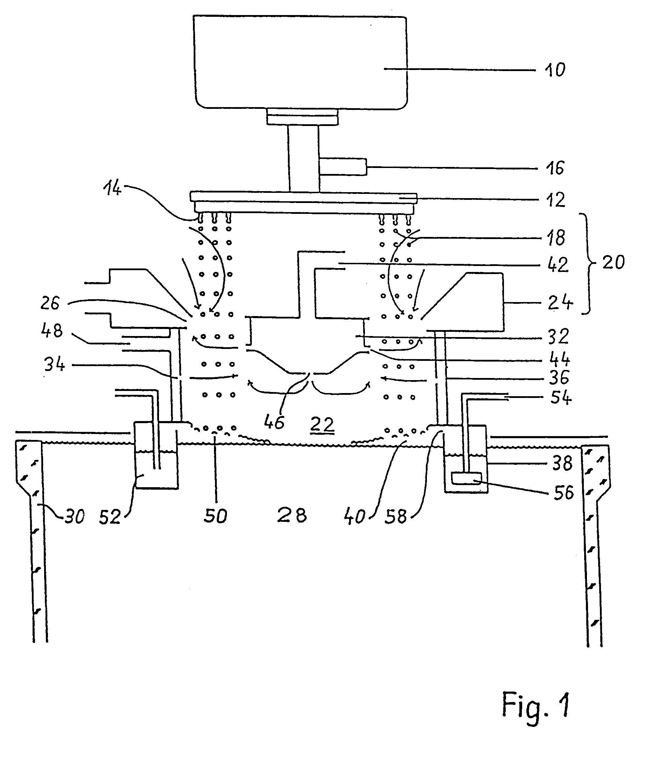

In Fig.1 ist rein prinzipiell eine Vorrichtung dargestellt, um mit großem Massendurchsatz Kugeln vorzugsweise bis zu einer Größe von etwa 5mm durch vibrationsangeregte Vertropfung von Flüssigkeiten wie Dispersionen herstellen zu können, die zur Ausbildung der Kugeln eine Sol-Gel-Reaktion durchlaufen und in einer Reaktionsflüssigkeit verfestigt werden. Eine Wärmebehandlung wie Brennen und Sintern kann sich in gewohnter Weise anschließen.

Die erfindungsgemäße Vorrichtung umfaßt eine von einem Schwingungserreger (10) in Schwingung versetzte Düsenplatte (12), die eine Vielzahl von Düsenöffnungen (14) aufweist, die vorzugsweise auf konzentrisch zueinander verlaufenden Ringen angeordnet sind. Über die Öffnungen tritt eine der Düsenplatte (12) über den Anschluß (16) zugeführte Dispersion, wobei pro Öffnung (14) und pro Zeiteinheit die gleiche Flüssigkeitsmenge austritt.

Durch diese Maßnahme wird eine stabile "Tropfenwand" in Form von einer Umhüllenden gebildet, die z.B. die geometrische Form eines Zylindermantels aufweisen kann. Im Ausführungsbeispiel, bei dem auf drei konzentrisch zueinander verlaufenden Ringen die Düsenöffnungen angeordnet sind, besteht die Umhüllende an und für sich aus drei konzentrisch zueinander angeordneten Hüllen. Aus Gründen der Einfachheit wird jedoch stets nur von einer Umhüllenden gesprochen.

Die Düsenplatte (12) ist erfindungsgemäß vorzugsweise federnd mit einer Halteeinrichtung verbunden, wobei ein die Düsenplatte (12) in Schwingung versetzender Schwingungserreger (10) wenigstens in Richtung der Längsachse der Düsen freischwingend an der Düsenplatte (12) angekoppelt ist. Folglich braucht der Schwingungserreger (10) nicht mehr das Gewicht der Düsenplatte (12) zu tragen, sondern kann allein auf die Erzeugung einer optimalen Schwingung ausgelegt sein. Die Rückstellkraft der Düsenplatte (12) wird von einer federnden Halterung erzeugt.

Aus den Öffnungen (14) austretende Tropfen (18) durchfallen eine erste Fallstrecke (20), in der die Tropfen (18) aufgrund ihrer Kohäsionskräfte hinreichend Zeit haben, eine Kugelform einzunehmen, bevor sie in einen ringförmigen Reaktionsraum (22) gelangen, der auch als zweite Fallstrecke oder Reaktionsfallstrecke bezeichnet werden kann.

Der Reaktionsraum (22) hat die Aufgabe, die kugelige Form der fallenden Tropfen (18) dadurch zu stabilisieren, daß eine Sol-Gel-Reaktion durch Begasung mit einem Reaktionsgas erfolgt.

Der Reaktionsraum wird düsenplattenseitig von einer Absaugeinrichtung (24) begrenzt, die einen umlaufenden Absaugring (26) bildet. Zwischen dem Absaugring (26) und der Oberfläche einer Reaktionsflüssigkeit (28), die sich in einem Behältnis (30) befindet, wird das zur Auslösung der Sol-Gel-Reaktion erforderliche Reaktionsgas über eine mittig im Reaktionsraum (22) und damit der Umhüllenden angeordnete Düseneinrichtung (32) und/oder einen außenseitig angeordneten Düsenring (34) abgegeben, der von einer zylindermantelförmigen Wandung (36) ausgeht, die den Reaktionsraum (22) außenseitig begrenzt und sich zwischen der Absaugeinrichtung (24) und einer Ringkammer (38) erstreckt, über die ein Schaum (40) auf die Oberfläche der Reaktionsflüssigkeit (28) abgegeben wird.

Der Begasungseinrichtung (32) wird über eine Leitung (42) Reaktionsgas zugeführt, um dieses über einen peripher umlaufenden Schlitz (44) bzw. eine mittig angeordnet und an der Unterseite der Begasungseinrichtung (32) vorhandene Öffnung (46) abzugeben.

Auf diese Weise ist sichergestellt, daß die fallenden Tropfen (18) allseitig vom Reaktionsgas umspült werden, um auf diese Weise durch die ablaufende Sol-Gel-Reaktion die Stabilisierung der bereits eine Kugelform aufweisenden Tropfen (18) sicherzustellen.

Der außenseitigen Ringdüse (34) wird das Reaktionsgas über eine Ringkammer (48) zugeführt.

Alternativ könnte selbstverständlich auch die Möglichkeit bestehen, daß die Absaugeinrichtung im Zentrum des Reaktionsraumes (22) angeordnet ist und das Reaktionsgas im wesentlichen von außen zugeführt wird.

Um ein Abbremsen der fallenden Kugeln vor Auftreffen auf die Flüssigkeitsoberfläche (50) zu erreichen, wird der quasi als Schaumkissen wirkende Schaum (40) ausgebildet, der von der Ringkammer (38) abgegeben wird. In der Ringkammer (38), die sich bereichsweise innerhalb des Reaktionsbades (28) erstreckt, befindet sich eine Tensidlösung (52), die durch feinperliges Einblasen von Luft über eine Leitung (54) und einem Verteilerrohr (56) aufgeschäumt wird, wobei der Schaum gezwungen wird, über einen oberhalb der Reaktionsflüssigkeitsoberfläche (50) verlaufenden Ringspalt (58) auf die Flüssigkeit (28) abgegeben zu werden.

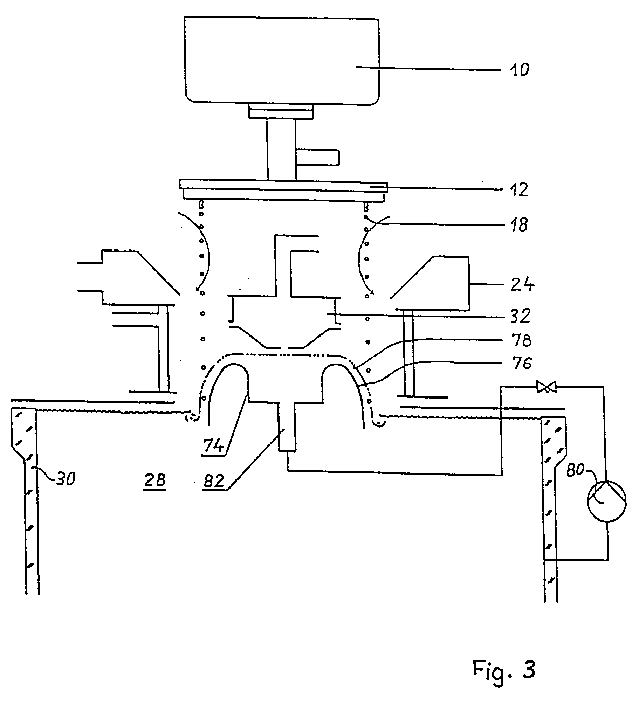

Gegebenenfalls kann auf das Schaumkissen aufgrund stofflicher Zusammensetzung und Größe der Flüssigkeitstropfen verzichtet werden. Ferner kann der Schaum durch Maßnahmen ersetzt oder ergänzt werden, die im Zusammenhang mit der Fig. 3 beschrieben werden.

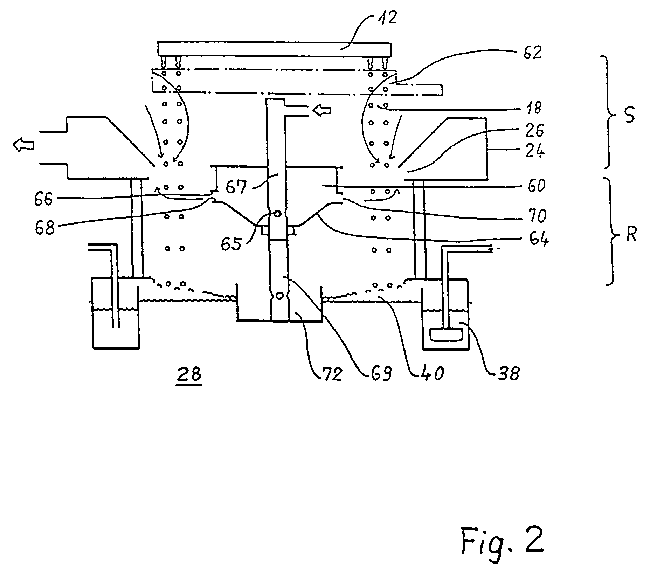

In Fig. 2 sind Details einer bevorzugten Ausführungsform einer Vorrichtung zur Herstellung von Mikrokugeln dargestellt, die verfahrensmäßig entsprechend der Vorrichtung gemäß Fig. 1 gehandhabt wird. Daher werden grundsätzlich gleiche Elemente mit gleichen Bezugszeichen versehen.

Die von der Düsenplatte (12) austretenden Tropfen durchfallen zunächst eine Strecke S, in der allein eine Ausbildung zu einer Kugelgestalt erfolgt, ohne daß eine Sol-Gel-Reaktion durch Umspülen des Reaktionsgases durchgeführt wird. Nach Durchfallen der Strecke S gelangen die Tropfen in den Einfluß eines Reaktionsgases, das von einer zentral, also innerhalb einer von der Tropfenwand gebildeten Umhüllenden angeordneten Einrichtung (60) abgegeben wird. Das von der Einrichtung (60) kommende Reaktionsgas wird von der Absaugvorrichtung (24) abgesaugt, die die Umhüllende konzentrisch umgibt und den bereits beschriebenen Ringspalt (26) aufweist.

Wie die Fig. 2 zeigt, ist unterhalb des Ringspaltes (26) der Absaugvorrichtung (24) die innerhalb der Umhüllenden verlaufende Einrichtung (60) zur Abgabe von Reaktionsgas angeordnet. Die Einrichtung (60) umfasst ein tellerförmiges unteres Element (64), entlang dessen Innenfläche das über Öffnungen (65) eingeleitete Reaktionsgas geführt wird, das über einen Ringspalt (70) in Richtung der Umhüllenden abgegeben wird. Der Ringspalt (70) wird von dem oberen vorzugsweise horizontalen umlaufenden Rand (68) und einer im Abstand von diesem vorhandenen Fläche (66) gebildet. Um die Breite des Ringspaltes (70) einstellen zu können, ist das tellerförmige Element (64) zu der Fläche (66) abstandsveränderbar ausgebildet. Auch kann die Einrichtung (60) selbst in ihrer Höhe verstellt werden.

Das Element (64) ist entlang eines Rohres (67) verschiebbar, in dem sich die Öffnungen (65) befinden, über die das Reaktionsgas zugeführt wird.

Das Rohr (67) geht seinerseits in ein Abstützrohr (69) über. Konzentrisch zum Rohr (69) ist in der Reaktionsflüssigkeit (28) ein topfförmiger Vorratsbehälter (72) angeordnet, in dem Schaum erzeugt wird.

Außerhalb der Umhüllenden ist die Ringkammer (38) angeordnet, über die entsprechend des Ausführungsbeispiels nach Fig. 1 Schaum erzeugt wird.

Zwischen dem Düsenkopf (12) und Reaktionsfallstrecke (R) kann ein verschwenkbarer Tropfenfänger (62) angeordnet sein, der dann aus der Tropfenfallstrecke (S) entfernt wird, wenn die Tropfen in der gewünschten gleichmäßigen Form erzeugt sind (nach Erreichen stabiler Betriebsverhältnisse).

Zu der das Reaktionsgas abgebenden Einrichtung ist noch anzumerken, daß über diese eine intensive Begasung der vorbeifallenden Tropfen durch radiales Anströmen ermöglicht wird. Ergänzend kann - wie in Fig. 1 - außerhalb der Umhüllenden eine weitere Einrichtung zur Abgabe von Reaktionsgas vorgesehen sein.

Die Reaktionsgas abgebende Einrichtung bestehend aus den Elementen (60), (64), (66), (67) und (68) erfüllt des weiteren die Aufgabe eines Verdrängerkörpers, um eine vollständige und sichere Absaugung des Reaktionsgases über den Ringspalt (26) der Absaugeinrichtung (24) zu gewährleisten.

In Fig. 3 ist eine weitere Ausführungsform einer Vorrichtung zur Herstellung von Mikrokugeln dargestellt, wobei das vibrationsangeregte Vertropfen und Vorverfestigen sowie die sich anschließende Sol-Gel-Reaktion entsprechend der Ausführungsbeispiele gemäß der Fig. 1 und 2 erfolgt.

Abweichend wird jedoch auf der Oberfläche der Reaktionsflüssigkeit keine Schaumschicht erzeugt. Vielmehr ist konzentrisch zur von den Tropfen (18) gebildeten Umhüllenden eine Reaktionsflüssigkeitsverteileinrichtung (74) angeordnet, die aus der Flüssigkeit (28) herausragt.

Entlang der Oberfläche (76) der Einrichtung (74) wird eine Reaktionsflüssigkeitsschicht (78) erzeugt, die laminar oder im wesentlichen laminar entlang der Oberfläche (76) strömt.

Um der Verteileinrichtung (74) die Reaktionsflüssigkeit zuzuführen, wird aus dem Behälter (30) über eine Umlaufpumpe (80) Reaktionsflüssigkeit einer zentralen Bohrung (82) in der Einrichtung (74) zugeführt, um radial auf die Oberfläche (76) abgegeben zu werden. Entsprechend der Fördermenge kann die Dicke der Schicht (78) eingestellt werden.

Die Abmessungen der Einrichtung (74) sind derart auf die von den Tropfen (18) gebildeten Umhüllenden ausgerichtet, daß die Strömungsschicht (78) tangential und gleichgerichtet an die von den Tropfen (18) gebildete Umhüllende herangeführt wird. Hierdurch nimmt die Schicht (78) die Tropfen (18) schonend auf und bietet einen hinreichenden Schutz gegen Deformationen beim Eintreten in die Reaktionsflüssigkeit.

Erwähntermaßen ist die Dicke der Flüssigkeitsschicht (78) auf der Oberfläche (76) der pilzkopfförmigen Einrichtung (76) veränderbar, um an die Mikrokugelproduktion angepaßt zu werden.

Der erfindungsgemaße Vorschlag ist für alle Verfahren der Mikrokugelherstellung einsetzbar wie Sol-Gel-Verfahren, Alginatverfahren, Schmelzverfahren für Kunststoffe etc..

Das erfindungsgemäße Verfahren kann zur Herstellung von z.B. Al₂O₃-Kugeln oder Kunststoffkugeln bis zu einem Durchmesser von 5 mm benutzt werden.

Nachstehend soll anhand eines Ausführungsbeispiels das Verfahren näher erläutert werden, aus dem sich weitere Einzelheiten und Merkmale ergeben.

Eine Al₂O₃-Dispersion mit ca. 20 % Feststoffgehalt und einer Viskosität von 25 bis 75 mPa s wird dem Düsenkopf (12) zugeführt, der mit auf zwei konzentrisch zueinander angeordneten Kreisen angeordneten Düsen versehen ist. Die Dispersion wird dabei vorzugsweise mit einer Frequenz im Bereich von 20 bis 100 Hz vertropft.

Nachdem sich ein gleichmäßiges ruhiges Tropfenbild im Stroboskoplicht zeigt, wird der zuvor unterhalb des Düsenkopfs (12) angeordnete Tropfenfänger (62) weggeschwenkt, damit die Tropfen die Reaktionsfallstrecke R durchfallen können.

Die Fallstrecke S, innerhalb der auf die Tropfen kein Reaktionsgas einwirkt, beläuft sich auf 5 bis 15 cm. Eine gleiche Länge besitzt die Reaktionsfallstrecke R, innerhalb der die Absaugvorrichtung (24) bzw. der Absaugspalt (26) und die Reaktionsgasabgabeeinrichtung (60) angeordnet sind.

Unterhalb der Reaktionsfallstrecke R ist die Reaktionsflüssigkeit (28) angeordnet, bei der es sich um Deionat mit ca. 2 bis 10 % NH₄OH-Zusatz handelt.

Die Flüssigkeit weist einen Schaumteppich einer Dicke von ca. 5 bis 20 mm auf, der durch Abgabe von Schaum aus der Ringkammer (38) bzw. der zentralen Kammer (72) erzeugt wird.

Hierzu befindet sich in der Ringkammer (38) bzw. der zentralen Kammer (72) eine Tensid-Lösung, die durch feinperliges Einblasen von Luft aufgeschäumt wird. Der Schaum wird dann gezwungen, durch einen Ringspalt auszutreten und die Flüssigkeitsoberfläche zu bedecken.

Die in die Flüssigkeit (28) fallenden Kugeln zerstören teilweise die Schaumschicht. Der Verbrauch an Tensid zur Schaumerzeugung wird durch Nachspeisen von frischer Tensidlösung ausgeglichen; dieser Ablauf ermöglicht eine feinfühlige Einstellung der Schaumschichtdicke und eine individuelle Anpassung der Bremswirkung.

Die in Einsatz gelangende Anlage kann aus vier baugleichen Einheiten in kompakter Bauweise oberhalb der Reaktionsflüssigkeit bestehen, die ihrerseits allen Einheiten gemeinsam zugeordnet ist. Dabei ist selbstverständlich jeder Vertropfungseinheit eine gesonderte Ringkammer (38) zur Schaumausbildung zugeordnet, um die gewünschte individuelle Anpassung vornehmen zu können.

Mit jeder Einheit können ca. 50 bis 150 Liter Dispersion pro Stunde vertropft werden. Die aus der Reaktionsflüssigkeit entnommenen und sodann thermisch nachbehandelten Kugeln weisen eine regelmäßige Kugelform auf, wobei sich Durchmesserschwankungen von weniger als 4 % herausgestellt haben.

## Patentansprüche

1. Verfahren zur Herstellung von Mikrokugeln mittels über mehrere Öffnungen (14) einer Düsenplatte (12) erfolgender vibrationsangeregter Vertropfung von Flüssigkeit, wobei die Tropfen (18) bei Durchfallen einer ersten Fallstrecke (20, S) eine Kugelform annehmen und anschließend in einer zweiten Fallstrecke (R) zur Gelierung einem Reaktionsgas ausgesetzt werden, um sodann in eine gegebenenfalls eine Schaumschicht (40) aufweisende Reaktionsflüssigkeit (28) zu fallen,
**dadurch gekennzeichnet**,
daß durch jede Öffnung (14) der Düsenplatte (12) pro Zeiteinheit die gleiche Flüssigkeitsmenge hindurchtritt, daß die fallenden Tropfen (18) eine Umhüllende bilden, die allseitig in der zweiten Fallstrecke (R) von dem Reaktionsgas umströmt wird, und daß Reaktionsgas außer- oder innerhalb der Umhüllenden eingeleitet und außer- oder innerhalb der Umhüllenden abgesaugt wird.

2. Verfahren nach Anspruch 1,
**dadurch gekennzeichnet,**
daß Reaktionsflüssigkeit (78) an die herabfallenden Tropfen (18) tangential oder im wesentlichen tangential und gleichgerichtet zur Tropfenfallrichtung herangeführt wird.

3. Verfahren nach Anspruch 1 oder 2,
**dadurch gekennzeichnet,**
daß die Tropfen (18) auf eine gegebenenfalls in ihrer Dicke einstellbaren laminaren Reaktionsflüssigkeitsströmungsschicht (78) fallen.

4. Vorrichtung zur Herstellung von Mikrokugeln umfassend eine mehrere Öffnungen (14) zum Vertropfen einer Flüssigkeit aufweisende und in Vibration versetzbare Düsenplatte (12), eine zur Düsenplatte beabstandete Reaktionsfallstrecke (12), in der von der Düsenplatte fallende Tropfen (18) mit einem Reaktionsgas reagieren, und eine unterhalb der Reaktionsfallstrecke in einem Behältnis (30) vorhandene Reaktionsflüssigkeit (28), die gegebenenfalls mit einem Schaum (40) bedeckbar ist,
**dadurch gekennzeichnet**,
daß inner- oder außerhalb einer durch scheinbares Verbinden der fallenden Tropfen (18) gebildeten Umhüllenden eine das Reaktionsgas abgebende Begasungseinrichtung (32) innerhalb der Reaktionsfallstrecke angeordnet ist, daß außer- oder innerhalb der Umhüllenden eine Reaktionsgas absaugende Absaugeinrichtung (24, 26) angeordnet ist und daß inner- und/oder außerhalb die Umhüllenden in der Reaktionsflüssigkeit (28) eine Einrichtung (38, 72) zur Erzeugung des Schaums (40) angeordnet ist oder daß oberhalb vom Flüssigkeitsspiegel und konzentrisch zur Umhüllenden eine Reaktionsflüssigkeitsverteileinrichtung (74) derart angeordnet und ausgebildet ist, daß Reaktionsflüssigkeit (78) an die herabfallenden Tropfen (18) tangential oder im wesentlichen tangential und gleichgerichtet zur Tropfenfallrichtung heranführbar ist.

5. Vorrichtung nach Anspruch 4,
**dadurch gekennzeichnet**,
daß die Absaugeinrichtung (24, 26) oberhalb einer Reaktionsgas abgebenden Begasungseinrichtung (60, 62) angeordnet ist.

6. Vorrichtung nach Anspruch 4,
**dadurch gekennzeichnet**,
daß die Begasungseinrichtung (60) ein tellerförmiges Element (64) umfaßt, das abstandsveränderbar zu einer Fläche (66) angeordnet ist, die mit oberem Rand (68) des Elementes einen Ringspalt (70) begrenzt.

7. Vorrichtung nach Anspruch 4,
**dadurch gekennzeichnet**,
daß die Umhüllende eine Zylindermantelform aufweist, zu der koaxial die Begasungseinrichtung (32, 34), die Absaugeinrichtung (24, 26) und die Einrichtung (38) zur Erzeugung des Schaums angeordnet sind.

8. Vorrichtung nach zumindest Anspruch 4,
**dadurch gekennzeichnet**,
daß die allseitig Reaktionsgas abgebende Begasungseinrichtung (60) innerhalb der Umhüllenden angeordnet ist.

9. Vorrichtung nach zumindest einem der vorhergehenden Ansprüche,
**dadurch gekennzeichnet**,
daß die Absaugeinrichtung (24, 26) ringförmig die Umhüllende umgibt.

10. Vorrichtung nach zumindest einem der vorhergehenden Ansprüche,
**dadurch gekennzeichnet**,
daß die Absaugeinrichtung (24, 26) und die Begasungseinrichtung (60) auf gegenüberliegenden Seiten der Umhüllenden angeordnet sind.

11. Vorrichtung nach zumindest einem der vorhergehenden Ansprüche,
**dadurch gekennzeichnet**,
daß die den Schaum (40) erzeugende Einrichtung (72) im Bereich der Längsachse der Umhüllenden innerhalb der Reaktionsflüssigkeit (28) angeordnet ist.

12. Vorrichtung nach zumindest einem der vorhergehenden Ansprüche,
**dadurch gekennzeichnet**,
daß die den Schaum erzeugende Einrichtung (38) eine die Umhüllende umgebende Ringkammer mit Schaumdurchtrittsspalt (58) ist.

13. Vorrichtung nach zumindest einem der vorhergehenden Ansprüche,
**dadurch gekennzeichnet**,
daß zwischen der Düsenplatte (12) und der Absaugeinrichtung (24, 26) ein entfernbarer Tropfenfänger (62) angeordnet ist.

14. Vorrichtung nach zumindest Anspruch 4,
**dadurch gekennzeichnet**,
daß die Reaktionsflüssigkeitsverteileinrichtung (74) eine pilzkopfförmige Oberfläche (76) mit vorzugsweise zentraler Austrittsöffnung für Reaktionsflüssigkeit aufweist, wobei sich auf der Oberfläche der Reaktionsflüssigkeitsverteileinrichtung eine laminare Strömungsschicht von Reaktionsflüssigkeit ausbildet.

15. Vorrichtung nach zumindest einem der vorhergehenden Ansprüche,
**dadurch gekennzeichnet**,
daß die Strömungsschicht (78) in ihrer Dicke einstellbar ist.

16. Vorrichtung nach Anspruch 4
**dadurch gekennzeichnet**,
daß die Düsenplatte (12) federnd mit einer Halteeinrichtung verbunden ist, daß die Düsenplatte mit einem Schwingungserreger verbunden ist, der wenigstens in Richtung der fallenden Tropfen freischwingend an der Düsenplatte angekoppelt ist, daß innerhalb einer durch scheinbares Verbinden der fallenden Tropfen (18) gebildeten Umhüllenden eine das Reaktionsgas abgebende Begasungseinrichtung (60) angeordnet ist, daß das Reaktionsgas über einen abstandsveränderbaren Ringspalt (40) abgegeben und über einen oberhalb des Ringspaltes (70) verlaufenden weiteren Ringspalt (26) absaugbar ist, der außerhalb der Umhüllenden angeordnet ist, und daß innerhalb oder außerhalb der Umhüllenden in der Reaktionsflüssigkeit (28) eine Einrichtung (38, 72) zur Erzeugung des Schaums (40) angeordnet ist oder daß oberhalb vom Flüssigkeitsspiegel und konzentrisch zur Umhüllenden eine Reaktionsflüssigkeitsverteileinrichtung (74) derart angeordnet und ausgebildet ist, daß eine Reaktionsflüssigkeit (78) an die herabfallenden Tropfen (18) tangential oder im wesentlichen tangential und gleichgerichtet zur Tropfenfallrichtung heranführbar ist.

## Claims

1. Method for producing microspheres by means of vibration-stimulated dripping of liquid through a plurality of openings (14) of a nozzle plate (12), the droplets (18) taking on a spherical shape while falling through a first free-fall section (20, S) and then, in a second free-fall section (R), being exposed to a reaction gas to produce gelling, thereafter falling into a reaction liquid (28) which may possess a foam layer (40),
**characterized in that**
the same quantity of liquid passes through each opening (14) of the nozzle plate (12) per unit time; that the falling droplets (18) form an envelope arround which, in the second free-fall section (R), the raction gas flows on all sides; and that reaction gas is introduced inside or outside the envelope, and is extracted outside or inside the envelope.

2. Method according to Claim 1,
**characterized in that**
reaction liquid (78) is directed onto the falling droplets (18) tangentially (or substantially tangentially) to and in the same direction as the direction in which the droplets are falling.

3. Method according to Claim 1 or 2,
**characterized in that**
the droplets (18) fall onto a laminar reaction liquid flow layer (78) whose thickness may be adjustable.

4. Apparatus for producing microspheres, comprising a nozzle plate (12) which has a plurality of openings (14) for dripping a liquid and can be caused to vibrate; a reaction free-fall section (12), spaced away from the nozzle plate, in which droplets (18) falling from the nozzle plate react with a reaction gas; and a reaction liquid (28), present below the free-fall section in a vessel (30), which if applicable can be covered with a foam (40),
**characterized in that**
a gas delivery device (32) delivering the reaction gas is arranged inside the reaction free-fall section inside or outside an envelope formed by apparent attachment of the falling droplets (18); that an extraction device (24, 26) extracting reaction gas is arranged outside or inside the envelope; and that a device (38, 72) to generate the foam (40) is arranged inside and/or outside the envelope in the reaction liquid (28), or that a reaction liquid distribution device (74) is arranged and configured, above the liquid level and concentrically with the envelope, in such a way that reaction liquid (78) can be directed onto the falling droplets (78) tangentially or substantially tangentially to and in the same direction as the direction in which the droplets are falling.

5. Apparatus according to Claim 4,
**characterized in that**
the extraction device (24, 26) is arranged above a gas delivery device (60, 62) which delivers reaction gas.

6. Apparatus according to Claim 4,
**characterized in that**
the gas delivery device (60) comprises a dished element (64) that is arranged so that its spacing can be varied with respect to a surface (66) that, with the upper rim (68) of the element, delimits an annular gap (70).

7. Apparatus according to Claim 4,
**characterized in that**
the envelope is in the shape of a hollow cylinder, coaxially with which the gas delivery device (32, 34), extraction device (24, 26), and the device (38) for generating the foam are arranged.

8. Apparatus according to at least Claim 4,
**characterized in that**
the gas delivery device (60) which delivers reaction gas on all sides is arranged inside the envelope.

9. Apparatus according to at least one of the preceding Claims,
**characterized in that**
the extraction device (24, 26) surrounds the envelope in annular fashion.

10. Apparatus according to at least one of the preceding Claims,
**characterized in that**
the extraction device (24, 26) and the gas delivery device (60) are arranged on opposite sides of the envelope.

11. Apparatus according to at least one of the preceding Claims,
**characterized in that**
the device (72) generating the foam (40) is arranged in the region of the long axis of the envelope inside the reaction liquid (28).

12. Apparatus according to at least one of the preceding Claims,
**characterized in that**
the device (38) generating the foam is an annular chamber, surrounding the envelope, with a foam gap (58).

13. Apparatus according to at least one of the preceding Claims,
**characterized in that**
a removable droplet collector (62) is arranged between the nozzle plate (12) and the extraction device (24, 26).

14. Apparatus according to at least Claim 4,
**characterized in that**
the reaction liquid distribution device (74) has a mushroom-shaped surface (76) with preferably a central outlet opening for reaction liquid, such that a laminar flow layer of reaction liquid forms on the surface of the reaction liquid distribution device.

15. Apparatus according to at least one of the preceding Claims,
**characterized in that**
the thickness of the flow layer (78) is adjustable.

16. Apparatus according to Claim 4,
**characterized in that**
the nozzle plate (12) is attached elastically to a mounting device; that the nozzle plate is attached to a vibration exciter which is coupled to the nozzle plate so as to vibrate freely at least in the direction of the falling droplets; that a gas delivery device (60) delivering the reaction gas is arranged inside an envelope formed by apparent attachment of the falling droplets (18); that the reaction gas is delivered through an annular gap (40) with variable spacing, and can be extracted through a further annular gap (26) extending above the annular gap (70), that is arranged outside the envelope; and that a device (38, 72) for generating the foam (40) is arranged inside or outside the envelope in the reaction liquid (28), or that a reaction liquid distribution device (74) is arranged and configured, above the liquid level and concentrically with the envelope, in such a way that a reaction liquid (78) can be directed onto the falling droplets (18) tangentially or substantially tangentially to and in the same direction as the direction in which the droplets are falling.

## Revendications

1. Procédé pour la fabrication de microbilles par gouttage excité par vibrations d'un liquide et s'effectuant par plusieurs ouvertures (14) d'une plaque à buses (12), les gouttes (18) prenant une forme sphérique pendant qu'elles tombent sur un premier parcours de chute (20, S), et étant exposées à un gaz de réaction dans un second parcours de chute (R), pour la gélification, et pour alors tomber dans un liquide de réaction (28) présentant éventuellement une couche de mousse (40), caractérisé en ce que chaque ouverture (14) de la plaque à buses (12) est traversée par unité de temps par la même quantité de liquide, en ce que les gouttes (18) qui tombent forment une enveloppe qui est balayée de tous côtés par le gaz de réaction dans le second parcours de chute (R), et en ce que le gaz de réaction est introduit à l'extérieur ou à l'intérieur de l'enveloppe et est aspiré à l'extérieur ou à l'intérieur de l'enveloppe.

2. Procédé selon la revendication 1, caractérisé en ce que le liquide de réaction (78) est amené sur les gouttes (18) qui tombent, tangentiellement ou essentiellement tangentiellement, et dans la même direction que la direction de chute des gouttes.

3. Procédé selon la revendication 1 ou 2, caractérisé en ce que les gouttes (18) tombent sur une couche laminaire d'écoulement du liquide de réaction (78) et dont l'épaisseur peut éventuellement être ajustée.

4. Dispositif pour la fabrication de microbilles, comportant une plaque à buses (12) présentant plusieurs ouvertures (14) pour le gouttage d'un liquide, et qui peut être mise en vibration, un parcours de chute de réaction (12) écarté de la plaque à buses, dans lequel les gouttes (18) tombant de la plaque à buse réagissent avec un gaz de réaction, et un liquide de réaction (28) présent dans un réservoir (30) situé en dessous du parcours de chute de réaction, et qui peut éventuellement être recouvert d'une mousse (40), caractérisé en ce qu'à l'intérieur ou à l'extérieur d'une enveloppe formée par l'association apparente des gouttes (18) qui tombent, un dispositif de fourniture de gaz (32) délivrant le gaz de réaction est disposé à l'intérieur du parcours de chute de réaction, en ce qu'à l'extérieur ou à l'intérieur de l'enveloppe est disposé un dispositif d'aspiration (24, 26) aspirant le gaz de réaction, et en ce qu'à l'intérieur et/ou à l'extérieur de l'enveloppe, un dispositif (38, 72) pour la formation de la mousse (40) est disposé dans le liquide de réaction (28), ou en ce qu'au-dessus du niveau de liquide et en position concentrique à l'enveloppe, un dispositif (74) de distribution de liquide de réaction est disposé et configuré de telle sorte que le liquide de réaction (78) puisse être amené sur les gouttes (18) qui tombent, tangentiellement ou essentiellement tangentiellement et dans le même sens que la direction de chute des gouttes.

5. Dispositif selon la revendication 4, caractérisé en ce que le dispositif d'aspiration (24, 26) est disposé au-dessus d'un dispositif de fourniture de gaz (60, 62) délivrant le gaz de réaction.

6. Dispositif selon la revendication 4, caractérisé en ce que le dispositif de fourniture de gaz (60) comprend un élément (64) en forme de plateau qui est disposé à distance modifiable d'une surface (66) qui délimite un interstice annulaire (70) avec le bord supérieur (68) de l'élément.

7. Dispositif selon la revendication 4, caractérisé en ce que l'enveloppe présente la forme d'un manteau cylindrique, par rapport auquel le dispositif de fourniture de gaz (32, 34), le dispositif d'aspiration (24, 26) et le dispositif (38) pour la formation de la mousse sont disposés coaxialement.

8. Dispositif selon au moins la revendication 4, caractérisé en ce que le dispositif de fourniture de gaz (60) délivrant le gaz de réaction de tous côtés est disposé à l'intérieur de l'enveloppe.

9. Dispositif selon au moins l'une des revendications précédentes, caractérisé en ce que le dispositif d'aspiration (24,26) entoure l'enveloppe en forme d'anneau.

10. Dispositif selon au moins l'une des revendications précédentes, caractérisé en ce que le dispositif d'aspiration (24, 26) et le dispositif de fourniture de gaz (60) sont disposés sur les côtés opposés de l'enveloppe.

11. Dispositif selon au moins l'une des revendications précédentes, caractérisé en ce que le dispositif (72) formant la mousse (40) est disposé dans la région de l'axe longitudinal de l'enveloppe, à l'intérieur du liquide de réaction (28).

12. Dispositif selon au moins l'une des revendications précédentes, caractérisé en ce que le dispositif (38) formant la mousse est une chambre annulaire entourant l'enveloppe et pourvue d'un interstice (58) de passage de la mousse.

13. Dispositif selon au moins l'une des revendications précédentes, caractérisé en ce qu'entre la plaque à buses (12) et le dispositif d'aspiration (24, 26) est disposé un piège à gouttes (62) amovible.

14. Dispositif selon au moins la revendication 4, caractérisé en ce que le dispositif (74) de distribution du liquide de réaction présente une surface (76) en forme de tête de champignon, qui comporte de préférence une ouverture centrale de sortie pour le liquide de réaction, une couche d'écoulement laminaire de liquide de réaction se formant sur la surface du dispositif de distribution de liquide de réaction.

15. Dispositif selon au moins l'une des revendications précédentes, caractérisé en ce que la couche d'écoulement (78) est d'épaisseur ajustable.

16. Dispositif selon la revendication 4, caractérisé en ce que la plaque à buses (12) est reliée de manière élastique à ressorts à un dispositif de maintien, en ce que la plaque à buses est reliée à un oscillateur qui est accouplé à la plaque à buses, à vibrations libres au moins dans la direction des gouttes qui tombent, en ce qu'à l'intérieur d'une enveloppe formée par l'association apparente des gouttes (18) qui tombent est disposé un dispositif de fourniture de gaz (60) délivrant le gaz de réaction, en ce que le gaz de réaction est délivré par un interstice annulaire (40) à écartement réglable et peut être aspiré par un autre interstice annulaire (26) s'étendant au-dessus de l'interstice annulaire (70), et qui est disposé à l'extérieur de l'enveloppe, et en ce qu'à l'intérieur ou à l'extérieur de l'enveloppe, un dispositif (38, 72) pour la formation de la mousse (40) est disposé dans le liquide de réaction (28), ou en ce qu'au-dessus du niveau de liquide et concentriquement par rapport à l'enveloppe, un dispositif (74) de distribution du liquide de réaction est disposé et configuré de telle sorte qu'un liquide de réaction (78) puisse être amené contre les gouttes (18) qui tombent, tangentiellement ou essentiellement tangentiellement et dans le même sens que la direction de chute des gouttes.
